(19) Europäisches Patentamt
European Patent Office
Office européen des brevets

(11) **EP 2 110 686 B1**

(12) **FASCICULE DE BREVET EUROPEEN**

(45) Date de publication et mention
de la délivrance du brevet:
**15.06.2011 Bulletin 2011/24**

(51) Int Cl.:
***G01V 1/30*** *(2006.01)* ***G01V 11/00*** *(2006.01)*

(21) Numéro de dépôt: **09290269.1**

(22) Date de dépôt: **10.04.2009**

(54) **Procédé pour rechercher des hydrocarbures dans un bassin géologiquement complexe, au moyen d'une modélisation de bassin**

Verfahren zur Suche nach Kohlenwasserstoffen in einem geologisch komplexen Becken durch Modellierung des Beckens

Method for finding hydrocarbons in a geologically complex basin, by means of modelling the basin

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **17.04.2008 FR 0802132**

(43) Date de publication de la demande:
**21.10.2009 Bulletin 2009/43**

(73) Titulaire: **IFP Energies nouvelles**
**92852 Rueil-Malmaison Cedex (FR)**

(72) Inventeurs:
• **Cacas, Marie-Christine**
**92500 Rueil-Malmaison (FR)**
• **Rudkiewicz, Jean-Luc**
**92160 Antony (FR)**
• **Faille, Isabelle**
**78420 Carrières-sur-Seine (FR)**
• **Daniel, Jean-Marc**
**78400 Chatou (FR)**
• **Have, Pascal**
**92500 Rueil-Malmaison (FR)**

(56) Documents cités:
WO-A-02/47011 WO-A-2006/113939
US-A1- 2002 013 687

• CAO W ET AL: "Approaches for generating moving adaptive meshes: location versus velocity" INSPEC,, 1 janvier 2003 (2003-01-01), XP002503847

EP 2 110 686 B1

**Description**

La présente invention concerne le domaine de l'exploration pétrolière. L'exploration pétrolière consiste à rechercher des gisements d'hydrocarbures dans un bassin sédimentaire.

La démarche générale comporte des allers-retours entre:

- des expertises et des études géologiques d'évaluation du potentiel pétrolier du bassin sédimentaire, réalisées à partir des données disponibles (affleurements, campagnes sismiques, forages). Cette expertise vise

    - à mieux comprendre l'architecture et l'histoire géologique du sous-sol, notamment à étudier si des processus de maturation et de migration d'hydrocarbures ont pu se mettre en place ;

    - à identifier les zones du sous-sol dans lesquelles ces hydrocarbures ont pu s'accumuler ;

    - à établir quelles zones présentent le meilleur potentiel économique, évalué à partir du volume et de la nature des hydrocarbures probablement piégés (viscosité, taux de mélange avec de l'eau, composition chimique ...), ainsi que de leur coût d'exploitation (contrôlé par exemple par la profondeur et la pression de fluide).

- des forages d'exploration dans les différentes zones présentant le meilleur potentiel, afin de confirmer ou infirmer le potentiel estimé préalablement, et d'acquérir de nouvelles données pour alimenter de nouvelles études plus précises.

Dans certains bassins sédimentaires, ayant subi une histoire géologique compliquée faisant interagir de nombreux processus physiques, ou lorsque le volume de données est très important, une simple intervention humaine d'expertise ne suffit pas à prédire l'emplacement et l'intérêt économique des gisements. On met alors en oeuvre une démarche faisant appel à des outils informatiques de synthèse des données disponibles et de simulation de l'histoire géologique et des multiples processus physiques qui la contrôlent. Il s'agit d'une démarche dite de "*modélisation de bassin*". Elle fournit une cartographie prédictive du sous-sol indiquant l'emplacement probable des gisements, ainsi que la teneur, la nature et la pression des hydrocarbures qui y sont piégés.

**État de la technique**

La compréhension des principes de la genèse des hydrocarbures et leurs liens avec l'histoire géologique du sous-sol, a permis la mise au point de méthodes de prédiction du potentiel pétrolier et de l'emplacement des gisements dans les bassins sédimentaires. Ces méthodes s'appuyaient sur des observations géologiques effectuées sur le terrain, et des géologues experts intégraient leurs connaissances dans un raisonnement visant à fournir des hypothèses de scénarios de formation, migration et piégeage des hydrocarbures pour chaque bassin étudié. Les forages d'exploration étaient ensuite réalisés suivant leurs recommandations, avec un taux de succès de l'ordre d'une découverte de gisement pour 10 puits forés. Les informations fournies par cette phase d'expertise étaient essentiellement qualitatives.

Dans les années 80, le développement de l'informatique a fourni de nouveaux outils pour assister les géologues dans cette démarche, les aider à fournir des informations quantitatives et plus fiables, et leur permettre ainsi d'augmenter ce taux de succès. De nombreux codes informatiques se sont développés pour mieux appréhender et quantifier chacun des phénomènes géologiques contrôlant la formation, la migration et le piégeage des hydrocarbures. Parmi ces outils, on peut citer:

    1. Les logiciels de "restauration structurale"

    2. Les logiciels dits "de modélisation de bassin"

*La restauration structurale*

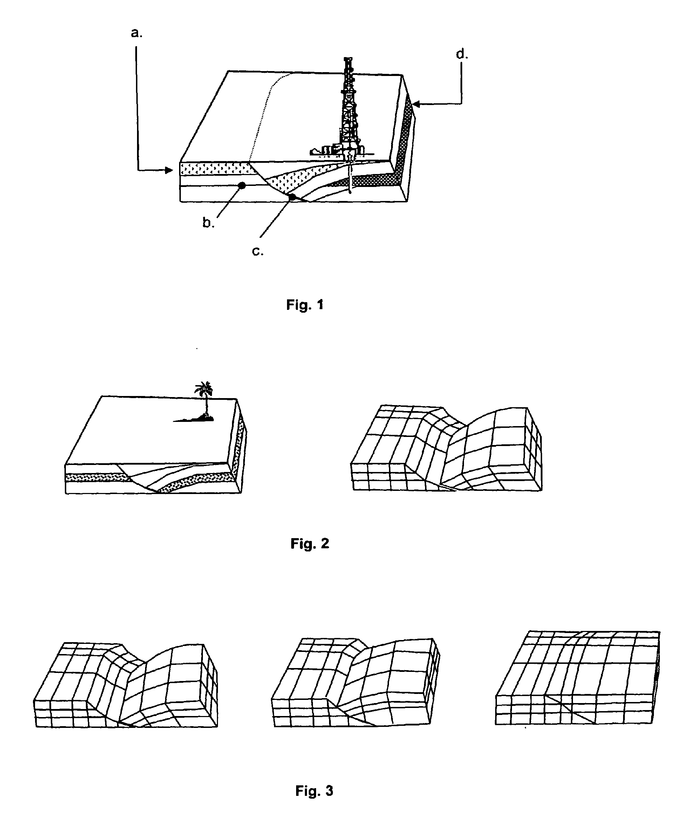

Les logiciels de restauration structurale visent à construire, visualiser et valider une hypothèse concernant l'architecture actuelle du sous-sol, et son évolution au cours des temps géologiques passés. L'architecture du sous-sol est décrite par la forme et la position des failles et des interfaces séparant les principales couches sédimentaires (figure 1). Une étude de restauration structurale est par exemple engagée lorsque l'on ne dispose que de données fragmentaires imprécises concernant cette architecture : observations géologiques de terrain, campagnes sismiques ou données acquises le long de forages. De manière schématique, les logiciels de restauration offrent les fonctionnalités d'un puzzle interactif sur ordinateur, en 2 ou 3 dimensions. Le sous-sol à l'actuel est supposé formé d'éléments jointifs, surfaciques ou volumiques; les contours de ces éléments correspondent aux interfaces sédimentaires et aux failles. La restauration structurale consiste à reconstituer les états successifs de l'architecture du sous-sol au cours de son histoire géologique, en partant de son architecture à l'actuel, et en remontant dans le temps. L'architecture des états passés est reconstituée en déformant ces éléments à partir de leur état actuel, puis en les déplaçant et en les agençant les uns par rapport aux autres conformément au scénario de déformation envisagé par le géologue. Cet outil permet :

- de transformer un scénario conceptuel issu de l'interprétation géologique en un scénario quantifié numériquement, reproduit sur ordinateur.

- de valider ce scénario : le critère de validation de base consiste essentiellement à vérifier que le scénario envisagé ne viole pas la condition de contact parfait entre les éléments; en effet, la présence de vide ou de recouvrement entre éléments du sous-sol n'est pas physiquement admissible et invalide l'hypothèse testée.

Les logiciels de restauration fonctionnent selon l'un ou l'autre des deux principes suivants:

1. la restauration par approche cinématique, qui consiste à appliquer des transformations géométriques aux éléments pour reconstituer les différentes étapes de la déformation. Les transformations géométriques appliquées sont calculées ou définies par l'utilisateur, de manière à respecter la conservation des volumes (ou des surfaces en 2 dimensions) et le contact entre les éléments.

2. la restauration par approche mécanique, qui consiste à simuler la déformation du sous-sol par discrétisation puis résolution des équations de la mécanique des milieux continus. Pour les besoins de cette restauration, le milieu est supposé se comporter comme un matériau élastique quasi incompressible; les failles sont représentées comme des surfaces intérieures le long desquelles s'applique une condition de contact parfait, sans frottement. Dans ces conditions, les déplacements et déformations calculés sont parfaitement réversibles, c'est-à-dire que le calcul fournit le même résultat, que l'on parte de l'état final en remontant dans le temps, ou que l'on parte de l'état initial et que l'on simule les déformations dans l'ordre chronologique normal.

*La modélisation de bassin*

Les logiciels de modélisation de bassin permettent de simuler en une, deux ou trois dimensions, l'ensemble des processus sédimentaires, tectoniques, thermiques, hydrodynamiques et de chimie organique qui interviennent lors de la formation d'un bassin pétrolier. La démarche suivie par la plupart des modèles de bassin comporte trois phases:

1. une phase de construction d'un maillage du sous-sol tel qu'il est supposé à l'actuel, suivant une hypothèse sur son architecture interne et sur les propriétés qui caractérisent chaque maille: par exemple leur porosité, leur nature sédimentaire (argile, sable ...) ou encore leur teneur en matière organique au moment de leur sédimentation. La construction de ce modèle se base sur des données acquises par campagnes sismiques ou mesures en forages.

2. une phase de reconstruction des étapes antérieures de l'architecture du bassin en se basant sur l'hypothèse que sa déformation résulte uniquement d'une combinaison de mouvements verticaux par compaction du sédiment ou par surrection ou affaissement de son socle. Cette étape est appelée "backstripping" (Steckler, M.S., and A.B. Watts, Subsidence of the Atlantic-type continental margin off New York, Earth Planet. Sci. Lett., 41, 1-13, 1978.). Elle repose sur l'hypothèse de préservation des verticales: tout segment vertical traversant le bassin reste le long de la même droite verticale au cours de la déformation; sa longueur et sa cote évoluent cependant au cours du temps sous l'effet de la compaction des terrains et de la subsidence du bassin. C'est une forme de restauration cinématique, qui n'est valide que pour les cas les plus simples de contexte tectonique.

3. une étape de simulation numérique d'une sélection de phénomènes physiques se déroulant au cours de l'évolution du bassin et contribuant à la formation des pièges pétroliers.

Le modèle de bassin est un outil fondamental pour l'exploration, car il fournit en sortie l'ensemble des données nécessaires à la prédiction de la localisation des gisements et de leur intérêt économique.

Pour l'essentiel, les simulateurs de bassin (logiciels) proposés actuellement se limitent à l'hypothèse selon laquelle la déformation du bassin étudié est correctement représentée par backstripping, c'est-à-dire que toutes les déformations peuvent être raisonnablement représentées par des mouvements verticaux, sans pénaliser la fiabilité des résultats. Cependant, de nombreux bassins présentent en fait une architecture et une histoire tectonique "complexe" pour laquelle cette hypothèse n'est plus acceptable; dans ce contexte, l'utilisation d'un modèle de bassin en géométrie simple peut induire des erreurs sur la prévision des pièges. Par exemple, le glissement des terrains le long de certaines interfaces sédimentaires sub-horizontaux (appelés "décollement" en géologie) illustre les limites des simulations en contexte de géométrie simple. Les décollements sont des phénomènes très fréquents dans les zones plissées du globe. Les décollements "cisaillent" les lignes verticales du bassin; les portions du sous-sol placées au-dessus du décollement sont transportées horizontalement pour se superposer à d'autres: la condition de préservation des verticales n'est plus valide. Ce phénomène peut fortement contrôler la position actuelle des pièges. Ainsi, un chemin de migration vertical peut remplir successivement plusieurs réservoirs qui sont transportés ensuite par mouvement horizontal dans un autre secteur du bassin.

L'objet de l'invention concerne un procédé alternatif de modélisation de bassin, particulièrement adaptée à l'exploration des bassins ayant subi des cassures au cours de leur histoire, en ce qu'il utilise les résultats d'une restauration structurale mécanique pour réaliser des simulations de systèmes pétroliers.

## La méthode selon l'invention

Le procédé selon l'invention permet de cartographier un bassin sédimentaire comportant des couches sédimentaires et des fractures, dont l'architecture et la nature des couches résultent d'une déformation du sous-sol au cours des temps géologiques, entre un temps géologique t et l'actuel. Selon ce procédé, on construit un maillage représentatif de l'architecture actuelle du bassin, et on réalise les étapes suivantes :

- on reconstitue des architectures passées dudit bassin depuis l'actuel jusqu'au temps géologique t, en déformant ledit maillage pour construire une succession de maillages lagrangiens, au moyen d'une restauration structurale en trois dimensions dans laquelle la déformation dudit bassin est calculée par résolution d'équations de la mécanique des milieux continus à l'aide d'une méthode aux éléments finis ;

- on réalise une simulation de processus géologiques et géochimiques qui contrôlent une mise en place d'un gisement pétrolier, ladite simulation étant effectuée dans lesdits maillages lagrangiens depuis le temps géologique t jusqu'à l'actuel ; et

- on réalise une cartographie dudit bassin sédimentaire à partir de ladite simulation, de façon à identifier des zones du bassin dans lesquelles des hydrocarbures ont pu s'accumuler.

Selon l'invention, la restauration structurale peut comporter une étape de correction des maillages lagrangiens en ajoutant des couches de mailles représentant des sédiments érodés, ou en supprimant une couche de mailles supérieure représentant un sédiment déposé au cours d'une étape antérieure.

La restauration structurale peut également comporter une étape de corrections des maillages lagrangiens dans laquelle on incrémente un déplacement vertical des noeuds, ce déplacement étant calculé suivant une loi dépendant de la profondeur, de façon à tenir compte de la décompaction du sédiment pendant une étape antérieure.

Les processus géologiques et géochimiques peuvent être sélectionnés parmi les processus suivants : mise en place des couches sédimentaires, compaction des couches sédimentaires sous l'effet du poids de sédiments sus-jacents, réchauffement des couches sédimentaires au cours de leur enfouissement, modifications de pressions de fluides résultant dudit enfouissement, transformation chimique de matière organique en hydrocarbures, déplacement desdits hydrocarbures dans ledit bassin sous l'effet de la flottabilité, de la capillarité et de l'advection par des écoulements souterrains, et piégeage des hydrocarbures dans des gisements.

Selon l'invention on peut construire un sous-maillage au niveau d'interfaces de glissement, telles que des failles ou des décollements, de façon à ce qu'une face d'une maille d'un côté de l'interface soit en contact avec une seule face d'une maille placée sur l'autre côté. On peut aussi, compléter les maillages lagrangiens par deux couches de mailles ajoutées le long d'interfaces de glissement, en dupliquant de chaque côté de l'interface les mailles du maillage lagrangiens tout en assurant une coïncidence des mailles de chaque côté de l'interface, et en assignant aux mailles des deux couches une épaisseur quasi nulle, de façon à prendre en compte un comportement anisotrope des interfaces de glissement.

Enfin, l'invention concerne également un procédé d'exploration pétrolière dans lequel on prédit la localisation de gisements d'hydrocarbure et leur intérêt économique au sein d'un bassin sédimentaire, au moyen des étapes suivantes :

- on acquiert des données relatives audit bassin sédimentaire;

- on réalise une cartographie dudit bassin au moyen du procédé de cartographie selon l'invention ;

- on identifie des zones du bassin dans lesquelles des hydrocarbures ont pu s'accumuler, par analyse de ladite cartographie ;

- on réalise des forages d'exploration dans lesdites zones.

D'autres caractéristiques et avantages du procédé selon l'invention, apparaîtront à la lecture de la description ci-après d'exemples non limitatifs de réalisations, en se référant aux figures annexées et décrites ci-après.

## Présentation succincte des figures

- La figure 1 montre une représentation schématique du sous-sol d'un bassin pétrolier.

- La figure 2 est une représentation "en écorché" un maillage de type "Corner Point Généralisé" du bassin représenté sur la figure 1.

- La figure 3 représente un modèle cinématique "backward" de la déformation du bassin de la figure 1, représenté par 3 états de déformations.

- La figure 4 illustre un "écorché" du coraffinement de maillage utilisé pour résoudre le problème de non-coïncidence des maillages de part et d'autres d'une faille ou d'un décollement par discrétisation en volumes finis. La figure 4A montre deux blocs en contact mais maillés à l'aide de maillages non-coïncidents, la figure 4B illustre le raffinement de maillage opéré sur une maille.

- La figure 5 est un schéma décrivant le maillage des surfaces de failles. La figure 5A illustre la prise en compte des failles dans les modèles de bassin basés sur une discrétisation par volumes finis "classique". La figure 5B illustre la prise en compte des failles selon la méthode proposée. Les mailles grisées servent à discrétiser l'hydrodynamisme associé à la faille.

**Description détaillée de la méthode**

Le procédé suivant l'invention permet de cartographier un bassin sédimentaire comportant des couches sédimentaires et des fractures. L'architecture et la nature des couches sédimentaires de ce bassin, telles qu'on peut les observer à l'actuel, résultent d'une déformation du sous-sol au cours des temps géologiques, entre un temps géologique *t* et l'actuel. La figure 1 montre une représentation schématique du sous-sol d'un bassin pétrolier, avec :

a. une couche géologique

b. une interface sédimentaire

c. une surface de faille (interface de glissement)

d. une accumulation d'hydrocarbure dans une couche géologique

Le procédé comporte une technique de modélisation de bassin applicable à la recherche de pièges pétroliers dans des contextes de tectonique complexe typiquement tridimensionnelle. Il comporte les trois étapes suivantes:

1- une étape de construction d'un maillage du bassin sédimentaire, tel qu'il est supposé à l'actuel. Ce maillage est conservé pour les deux étapes suivantes.

2 une étape de restauration tridimensionnelle s'appuyant sur le maillage précédent, et qui ne présuppose pas la préservation des verticales au cours de l'histoire géologique. Cette restauration déforme le maillage obtenu à l'étape 1 et reconstitue l'histoire de la déformation dans le sens anti-chronologique. Le maillage dynamique obtenu est un maillage lagrangien, c'est-à-dire que chaque noeud reste attaché au même point matériel au cours de la déformation.

3- la simulation des processus géologiques et géochimiques au cours des temps géologiques suivant l'ordre chronologique, par discrétisation et résolution des équations de la physique dans le maillage lagrangien de l'étape 2 auquel on applique une dynamique "à rebours" : le maillage de l'état initial correspond à l'état final du maillage de l'étape 2; il évolue vers son état final qui correspond à l'état initial du maillage de l'étape 2.

Étape de construction d'un maillage du bassin sédimentaire

La construction d'un maillage représentatif de l'architecture du bassin, telle qu'elle est supposée à l'actuel, consiste à discrétiser en trois dimensions l'architecture du sous-sol telle qu'elle est supposée à l'actuel. Pour garantir la qualité des résultats obtenus dans les étapes suivantes, il est préférable de respecter les conditions suivantes :

- utiliser un maillage dit "mixte", constitué en grande majorité de mailles hexaédriques. Des mailles de moins de six faces peuvent cependant être utilisées localement, quand la complexité géométrique l'exige.

- les hexaèdres sont construits de manière à ce que deux faces opposées parmi les six coïncident avec des interfaces sédimentaires. Le résultat est optimal lorsque les quatre autres faces sont sub-perpendiculaires à ces interfaces sédimentaires. Ainsi, chaque couche sédimentaire est représentée par une unique couche de mailles dont la forme approche au mieux celle d'un pavé.

- le maillage respecte les surfaces constituant les failles ou les interfaces sédimentaires, c'est-à-dire qu'aucune maille ne doit traverser ces surfaces.

- sur les surfaces ayant enregistré un glissement au cours de la déformation, la coïncidence des mailles n'est pas exigée. Elle est obligatoire ailleurs. Un maillage est dit "coïncident" lorsque toutes les mailles partagent les mêmes faces et qu'aucune arête ne s'interrompt sur une face.

Les maillages appelés "corner point généralisé" par les spécialistes, représentent un cas particulier du maillage décrit ci-dessus. Ils peuvent être construits à partir d'outils de maillages mis en oeuvre dans des logiciels de géo-modélisation connus des spécialistes. La figure 2 illustre à gauche un exemple de bassin sédimentaire, et à droite un exemple illustrant ce type de maillage.

Étape de restauration structurale

Dans cette étape, on reconstitue des architectures passées du bassin depuis l'actuel jusqu'à un temps géologique t, antérieur à l'actuel. Pour ce faire, on déforme le maillage construit à l'étape précédente afin de représenter l'évolution anti-chronologique de l'architecture du sous-sol au cours des temps géologiques. On représente cette déformation par la succession d'un nombre discret de maillages lagrangiens représentant des états différents du maillage. Un maillage est dit "lagrangien", lorsque chaque noeud du maillage est attaché à un point matériel du sous-sol et le suit au cours des déformations. Dans l'exemple de la figure 3, trois états sont utilisés pour représenter la déformation du sous-sol au cours des temps géologiques. Le maillage de gauche représente l'état actuel, où l'on peut observer une interface de glissement (ici une faille). La maillage de droite représente le même bassin sédimentaire à un temps géologique t, antérieur à l'actuel. A ce temps *t*, les couches sédimentaires n'étaient pas encore fracturées. Le maillage du bassin est un état intermédiaire, c'est-à-dire qu'il représente le bassin sédimentaire à un temps *t'*, compris entre le temps *t* et l'actuel. On constate que le glissement a commencé à modifier l'architecture du bassin.

Pour réaliser cette étape, on utilise une technique de restauration structurale par approche mécanique : la déformation du bassin est calculée par discrétisation de l'espace et résolution des équations de la mécanique des milieux continus à l'aide d'une méthode aux éléments finis. Plus précisément, la déformation du bassin est calculée par résolution de l'équilibre mécanique entre les contraintes σ et les forces appliquées aux frontières *f* du domaine modélisé Ω : $\text{div}\sigma = f$ ; et on se place dans l'hypothèse selon laquelle le milieu se comporte de manière élastique.

Une telle restauration structurale est décrite par exemple dans le document suivant : I.Moretti, F.Lepage et M.Guiton, "KINE3D: a new 3D restauration method based on a mixed approach linking geometry and geomechanics", Oil & Gas Science and Technology - Rev.IFP, Vol.61 (2006), n°2, pp277-289.

Le maillage du bassin à l'instant initial est celui obtenu à l'étape précédente. La roche est représentée par un matériau élastique quasi-incompressible. Les conditions imposées aux limites du domaine simulé sont exprimées en termes de déplacements imposés, définis par l'utilisateur en entrée du calcul. Pour chaque état du maillage, la simulation calcule la nouvelle position des noeuds, de manière à assurer l'équilibre mécanique du milieu, le respect des déplacements imposés aux limites. En outre, une condition de contact parfait est imposée le long des surfaces de glissement. Ceci implique que le long du contact entre les deux parois d'une faille, tous les noeuds du maillage appartenant à l'une des parois sont en contact avec la face libre d'une maille appartenant à la paroi opposée.

Lorsque le calcul d'un état est terminé, il peut être nécessaire de corriger le maillage obtenu avant de calculer l'état suivant, afin de tenir compte d'une érosion ou d'un dépôt sédimentaire. Dans le cas d'une érosion, cette intervention consiste à ajouter les couches de mailles représentant les sédiments érodés pendant l'étape qui vient d'être considérée. Dans le cas d'un dépôt, l'intervention consiste à supprimer la couche de mailles supérieure, et qui représente le sédiment déposé au cours de l'étape qui vient d'être considérée.

Enfin, une dernière correction du maillage peut être réalisée pour tenir compte de la décompaction du sédiment pendant l'étape qui vient d'être considérée (Il s'agit de décompaction car on travaille dans le sens anti-chronologique). Un incrément de déplacement vertical des noeuds est calculé suivant une loi dépendant de la profondeur, de manière similaire à ce qui est réalisé dans une étape de backstripping.

Étape de simulation du système pétrolier

Au cours de cette étape, on simule l'ensemble des processus sédimentaires, tectoniques, thermiques, hydrodynamiques et de chimie organique qui interviennent lors de la formation d'un bassin pétrolier. On simule notamment les processus géologiques et géochimiques qui contrôlent la mise en place d'un système pétrolier suivant l'ordre chronologique, par discrétisation et résolution des équations de la physique de ces processus dans les maillages lagrangiens de l'étape de restauration (étape 2), auquel on applique une dynamique "à rebours": le maillage de l'état initial correspond à l'état final du maillage de l'étape 2; il évolue vers son état à l'Actuel et qui correspond à l'état initial du maillage de l'étape 2.

Les principes de simulation sont ceux d'une discrétisation et d'une résolution du système d'équations différentielles décrivant l'évolution des grandeurs physiques étudiées. Pour cette étape, on peut par exemple utiliser une discrétisation par la méthode des volumes finis, comme décrit par exemple dans "R. Scheichl, R. Masson, J. Wendebourg, Decoupling and Block Preconditioning for Sedimentary Basin Simulations, Computational Geosciences 7(4), pp. 295-318, 2003".

Cette méthode est particulièrement bien adaptée à la simulation de la migration des hydrocarbures. Elle est notamment plus performante que la discrétisation par éléments finis pour la simulation des écoulements polyphasiques comme le montre le document "The finite volume method, R. Eymard, T. Gallouet, R. Herbin, Handbook for Numerical Analysis, Ph. Ciarlet J.L. Lions eds, North Holland, 2000".

*Prise en compte des déformations entre deux états:*

Les simulations sont réalisées dans un contexte de maillage dynamique, c'est-à-dire qu'il subit des déformations au cours du temps, imposées en entrée du calcul. Un "évènement" correspond à l'ensemble des processus se déroulant entre deux états successifs du maillage issu de la restauration 3D. Pour les besoins de la simulation, l'évènement est discrétisé en pas de temps et les équations sont résolues à chaque pas de temps. Pour prendre en compte l'architecture du bassin à chaque pas de temps, on effectue une interpolation linéaire entre les deux états des maillages lagrangiens issus de la restauration. A un instant t+α.Δt (où 0 < α< 1) de l'événement correspondant à l'intervalle de temps [t, t+Δt], la position de chaque noeud M du maillage est donnée par:

$$M_t M = \alpha M_t M_{t+\Delta t}$$

*Simulation des processus:*

Comme décrit ci-dessus, on peut adopter une discrétisation par volumes finis dont les principes de base sont décrits par exemple dans "The finite volume method, R. Eymard, T. Gallouet, R. Herbin, Handbook for Numerical Analysis, Ph. Ciarlet J.L. Lions eds, North Holland, 2000". La méthode des volumes finis a initialement été conçue pour une discrétisation du milieu en mailles en forme de pavés. Elle a ensuite évolué de manière à pouvoir s'appuyer sur un maillage réalisé à l'aide de mailles de forme quelconque. On se reportera au même document (pp 715-1022) pour une description détaillée de cette méthode appliquée aux mailles de forme quelconque.

Conformément au principe des méthodes de Volumes Finis centrés sur les mailles, les inconnues sont discrétisées par une valeur constante par maille et les équations de conservation (masse ou chaleur) sont intégrées en espace sur chaque maille et en temps entre deux instants successifs. Les équations discrètes expriment alors que la quantité conservée dans une maille à un instant donné est égale à la quantité contenue dans la maille à l'instant précédent, augmentée des flux de quantités entrés dans la maille et réduite des flux de quantités sorties de la maille par ses faces, plus les apports extérieurs. L'évolution géométrique de la maille est naturellement prise en compte dans cette discrétisation. Les quantités contenues dans chaque maille sont approchées par leur valeur dans la maille, multipliée par le volume de la maille, ramenant alors la discrétisation à l'approximation de flux diffusifs sur chaque face du maillage. Différents schémas de discrétisation de flux sont applicables, suivant la précision souhaitée. Le plus simple est le schéma à deux points qui approche le flux sur une face uniquement en fonctions des inconnues dans les deux mailles voisines de la face. Ce schéma bien que peu précis en milieu homogène, permet de capturer l'essentiel de la solution en milieu hétérogène. Il peut être remplacé par des schémas plus précis, en particulier ceux de la famille des schémas MPFA introduite par I.Aavatsmark (I. Aavatsmark, G.T. Eigestad, B.T. Mallison, J.M. Nordbotten: A compact multipoint flux approximation method with improved robustness, Numerical Methods for Partial Differential Equations et références citées dans l'article), qui permettent d'améliorer la précision des solutions au prix néanmoins d'un coût calcul plus important. La discrétisation en temps est implicite permettant l'emploi de pas de temps relativement grands.

Le calcul de la contrainte verticale (poids des sédiments) sur un maillage non structuré sans direction privilégiée, requiert une approche différente par rapport à celle utilisée lorsque le maillage ne s'appuie pas sur des colonnes d'arêtes verticales. La contrainte verticale est ainsi approchée aux noeuds du maillage, et la discrétisation de l'équilibre mécanique vertical par différences finies décentrées permet d'exprimer la contrainte en un noeud en fonction des contraintes de ses noeuds voisins supérieurs et du poids des mailles voisines supérieures.

Comme en géométrie simple, le système algébrique obtenu à chaque pas de temps, couple les inconnues de pression et contraintes verticales dans l'ensemble du maillage et est résolu par des techniques standards ou spécifiques de résolution de systèmes linéaires («R. Scheichl, R. Masson, J. Wendebourg, Decoupling and Block Preconditioning for Sedimentary Basin Simulations, Computational Geosciences 7(4), pp. 295-318, 2003).

Cartographie du bassin sédimentaire

A la suite de cette étape de simulation des processus géologiques et géochimiques, au cours des temps géologiques et suivant l'ordre chronologique, on dispose par exemple d'information sur :

i. la mise en place des couches sédimentaires,

ii. leur compaction sous l'effet du poids des sédiments sus-jacents,

iii. leur réchauffement au cours de leur enfouissement,

iv. les modifications de pressions de fluides résultant de cet enfouissement,

v. la transformation chimique de la matière organique en hydrocarbures,

vi. le déplacement de ces hydrocarbures dans le bassin sous l'effet de la flottabilité, de la capillarité et de l'advection par les écoulements souterrains,

vii. le piégeage des hydrocarbures dans les gisements.

On peut alors construire une cartographie précise du bassin sédimentaire, décrivant à la fois son architecture respectant un scénario de déformation géologique au cours des temps géologiques, et la nature des couches sédimentaires.

Une telle cartographie permet alors de déterminer l'emplacement probable de gisements pétroliers dans le bassin, ainsi que la teneur, la nature et la pression des hydrocarbures qui y sont piégés, et donc de définir l'emplacement de forage d'exploration ou de production.

**Variantes**

*Prise en compte de la non-coïncidence des mailles le long des failles ou des niveaux de décollement:*

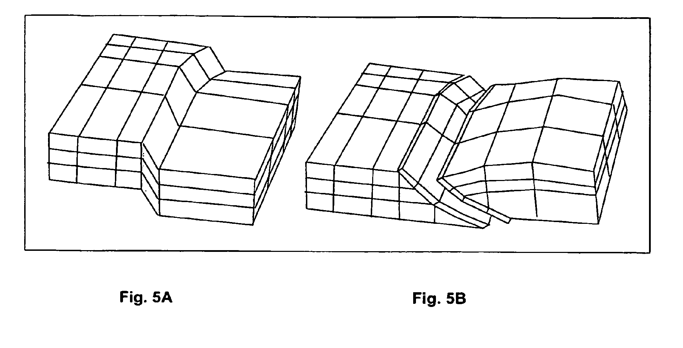

Dans les simulateurs de bassin classiques, les failles sont traitées de manière très simplifiée. Elles sont représentées par une colonne de mailles, suivant la représentation de la figure 5A. Lorsqu'il s'agit de failles perméables, on affecte une perméabilité importante à ces mailles; à l'extrême, on applique une condition de pression hydrostatique dans la faille, ce qui revient à négliger toute perte de charge due à la circulation dans le plan de faille. Lorsqu'au contraire celle-ci est imperméable, on impose une condition interne de flux nul le long des faces des mailles de faille. Cette modélisation simpliste du rôle des failles ne permet pas de prendre en compte la physique des écoulements de manière rigoureuse. Par exemple, elle ne permet pas de tenir compte d'un écoulement direct entre deux mailles initialement séparées l'une de l'autre, puis mises en contact par le biais du déplacement le long des failles.

L'étape de restauration du procédé selon l'invention se caractérise entre autre par le fait que le scénario de déformation du bassin autorise le glissement progressif le long des interfaces constituées par les failles ou les décollements au cours de la période simulée. Cependant, ceci engendre une non coïncidence des maillages de part et d'autre de ces interfaces : une face d'une maille d'une paroi peut être en contact avec plusieurs faces de mailles placées sur l'autre paroi. Autrement dit, les noeuds placés aux coins des mailles d'une face ne coïncident pas avec les noeuds placés aux coins des mailles de la face en contact. Or classiquement, la discrétisation des équations régissant les transferts de fluides et de chaleur par une méthode de volumes finis ne s'applique qu'à des maillages polyédriques coïncidents.

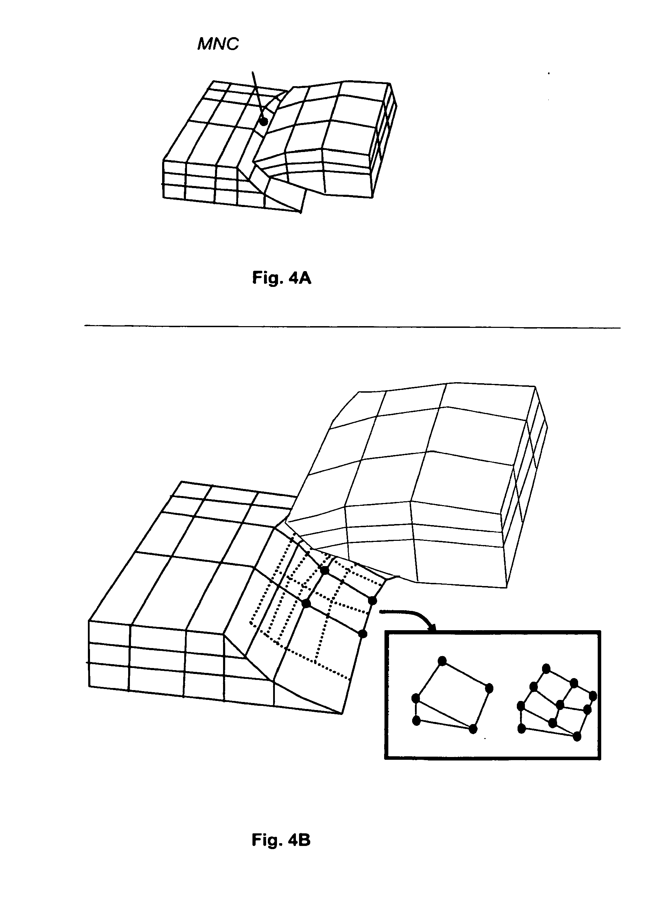

Pour pouvoir utiliser le formalisme des volumes finis dans le cadre d'un maillage non coïncident, tout en assurant que les transferts de fluide ou de chaleur à travers les surfaces non coïncidentes associées aux failles soient conservatifs (i.e. sans perte de masse ou de chaleur) et prennent bien en compte les variations de propriétés pétrophysiques de part et d'autre de l'interface, on adopte un principe consistant à fabriquer un sous-maillage du maillage non-coïncident, de manière à respecter les conditions de coïncidence. Ce sous-maillage est calculé à chaque incrément de déplacement en conservant le nombre et la géométrie des mailles, mais en ajoutant des noeuds de manière à subdiviser les faces en sous-faces coïncidentes comme indiqué sur la figure 4B. Ce sous-maillage est obtenu en superposant les deux maillages non-coïncidents (MNC - Figure 4A). Ces deux maillages sont les maillages de part et d'autre de la faille. On dit alors que les équations sont discrétisées sur un co-raffinement des maillages surfaciques des deux parois. Le co-raffinement est défini comme un maillage surfacique représentant la surface de faille tel que chaque face co-raffinée est en regard d'une seule face sur chaque paroi. Un algorithme permettant de déterminer un co-raffinement est par exemple donné dans "Overlaying Surface Meshes, Part I: Algorithms. X.Jiao and T.Heath. International Journal of Computational Geometry & Applications. Vol 14, N°6 (2004) 379-402".

*Prise en compte du comportement anisotrope des failles:*

On sait également que certaines failles sont connues pour constituer une barrière étanche aux écoulements transversaux par colmatage de leurs faces, tout en constituant un drain très efficace dans le sens longitudinal lorsque les faces ne sont pas parfaitement collées l'une à l'autre. Une fois de plus, ce phénomène ne peut pas être simulé dans l'approche classique illustrée sur la figure 5A.

En régime de tectonique complexe, caractérisé par le développement de nombreuses failles, il devient fondamental de modéliser de façon précise ce phénomène, car il peut contrôler fortement la relaxation des surpressions et la localisation des accumulations d'hydrocarbure.

Afin d'en tenir compte, on représente les failles selon la méthode qui suit. Le maillage est complété par deux couches de mailles ajoutées le long de chaque paroi de failles. Numériquement, il s'agit de mailles d'épaisseur négligeable, parfaitement coïncidentes avec leur voisine de la paroi à laquelle elles sont attachées, comme représenté sur la figure 5B. Elles simulent un volume de roche altérée qui borde classiquement les surfaces de failles, d'épaisseur très faible à l'échelle du bassin étudié, mais prépondérant pour les écoulements. Dans les calculs, ces mailles peuvent échanger normalement des fluides avec les mailles auxquelles elles sont accolées, mais également avec celles situées sur la paroi opposées moyennant un coraffinement réalisé suivant la méthode précédemment décrite. Le tenseur de perméabilité attribué à ces mailles est une donnée d'entrée de la simulation; on peut lui imposer une très grande anisotropie pour tenir compte par exemple d'une forte perméabilité dans le sens longitudinal (écoulement dans la faille) et d'une perméabilité faible, voire nulle, dans le sens transversal pour rendre compte d'une paroi de faille imperméabilisée par des dépôts minéraux.

Cette méthode de prise en compte des failles n'oblige pas à une modification profonde du maillage, puisque la couche de mailles "faille" est obtenue en dupliquant le maillage des parois. La face externe de ces mailles failles est ensuite co-raffinée selon la méthode ci-dessus si l'on souhaite tenir compte d'un échange de fluide entre les deux parois.

Numériquement, les nouvelles mailles "faille" sont traitées de manière similaire à toutes les autres mailles du domaine simulé.

## Applications

L'exploration pétrolière consiste à rechercher des gisements d'hydrocarbures dans un bassin sédimentaire. Selon l'invention, on peut prédire la localisation de gisements d'hydrocarbures et leur intérêt économique au sein d'un bassin sédimentaire, au moyen d'une cartographie dudit bassin réalisée à partir du procédé selon l'une des revendications présentes.

Le procédé d'exploration comporte alors les étapes suivantes :

- on acquiert des données relatives au bassin sédimentaire à étudier : affleurements, campagnes sismiques, forages ;

- à partir des données disponibles, on réalise une cartographie du bassin sédimentaire pour déterminer l'architecture et l'histoire géologique du sous-sol, et notamment on étudie si des processus de maturation et de migration d'hydrocarbures ont pu se mettre en place ;

- on identifie des zones du sous-sol dans lesquelles ces hydrocarbures ont pu s'accumuler, par analyse de la cartographie ainsi obtenue ;

- on définit des zones présentant le meilleur potentiel économique, évalué à partir du volume et de la nature des hydrocarbures probablement piégés (viscosité, taux de mélange avec de l'eau, composition chimique ...), ainsi que de leur coût d'exploitation (contrôlé par exemple par la profondeur et la pression de fluide) ;

- on réalise des forages d'exploration dans les différentes zones présentant le meilleur potentiel, afin de confirmer ou infirmer le potentiel estimé préalablement, et d'acquérir de nouvelles données pour alimenter de nouvelles études plus précises.

## Revendications

1. Procédé pour cartographier un bassin sédimentaire comportant des couches sédimentaires et des fractures, dont l'architecture et la nature des couches résultent d'une déformation du sous-sol au cours des temps géologiques, entre un temps géologique $t$ et l'actuel, dans lequel on construit un maillage représentatif de l'architecture actuelle dudit bassin, **caractérisé en ce que** :

   - on reconstitue des architectures passées dudit bassin depuis l'actuel jusqu'au temps géologique t, en déformant ledit maillage pour construire une succession de maillages dont chaque noeud reste attaché à un même point matériel au cours de la déformation, appelés maillages lagrangiens, au moyen d'une restauration structurale en trois dimensions dans laquelle la déformation dudit bassin est calculée par résolution d'équations de la mécanique des milieux continus à l'aide d'une méthode aux éléments finis ;
   - on réalise une simulation de processus géologiques et géochimiques qui contrôlent une mise en place d'un gisement pétrolier, ladite simulation étant effectuée dans lesdits maillages lagrangiens depuis le temps géologique $t$ jusqu'à l'actuel ; et
   - on réalise une cartographie dudit bassin sédimentaire à partir de ladite simulation, de façon à identifier des zones du bassin dans lesquelles des hydrocarbures ont pu s'accumuler.

2. Procédé selon la revendication 1, dans lequel la restauration structurale comporte une étape de correction desdits maillages lagrangiens en ajoutant des couches de mailles représentant des sédiments érodés, ou en supprimant une couche de mailles supérieure représentant un sédiment déposé au cours d'une étape antérieure.

3. Procédé selon l'une des revendications précédentes, dans lequel la restauration structurale comporte une étape de corrections desdits maillages lagrangiens dans laquelle on incrémente un déplacement vertical des noeuds qui est calculé suivant une loi dépendant de la profondeur de façon à tenir compte de la décompaction du sédiment au cours d'une étape antérieure.

4. Procédé selon l'une des revendications précédentes, dans lequel on sélectionne lesdits processus géologiques et géochimiques parmi les processus suivants : mise en place des couches sédimentaires, compaction des couches sédimentaires sous l'effet du poids de sédiments sus-jacents, réchauffement des couches sédimentaires au cours de leur enfouissement, modifications de pressions de fluides résultant dudit enfouissement, transformation chimique de matière organique en hydrocarbures, déplacement desdits hydrocarbures dans ledit bassin sous l'effet de la flottabilité, de la capillarité et de l'advection par des écoulements souterrains, et piégeage des hydrocarbures dans des gisements.

5. Procédé selon l'une des revendications précédentes, dans lequel on construit un sous-maillage au niveau d'interfaces de glissement, telles que des failles ou des décollements, de façon à ce qu'une face d'une maille d'un côté de l'interface soit en contact avec une seule face d'une maille placée sur l'autre côté.

**6.** Procédé selon l'une des revendications précédentes, dans lequel on complète lesdits maillages lagrangiens par deux couches de mailles ajoutées le long d'interfaces de glissement, en dupliquant de chaque côté de l'interface les mailles du maillage lagrangiens tout en assurant une coïncidence des mailles de chaque côté de l'interface, et en assignant aux mailles des deux couches une épaisseur quasi nulle, de façon à prendre en compte un comportement anisotrope des interfaces de glissement.

**7.** Procédé d'exploration pétrolière dans lequel on prédit la localisation de gisements d'hydrocarbure et leur intérêt économique au sein d'un bassin sédimentaire, au moyen des étapes suivantes :

> - on acquiert des données relatives audit bassin sédimentaire ;
> - on réalise une cartographie dudit bassin au moyen du procédé selon l'une des revendications précédentes ;
> - on identifie des zones du bassin dans lesquelles des hydrocarbures ont pu s'accumuler, par analyse de ladite cartographie ;
> - on réalise des forages d'exploration dans lesdites zones.

**Claims**

**1.** A method of mapping a sedimentary basin comprising sedimentary layers and fractures, whose architecture and layer nature result from a deformation of the subsoil over geological time, between a geological time $t$ and the current time, wherein a grid representative of the current architecture of said basin is constructed, **characterized in that**:

> - past architectures of said basin are reconstructed, from the current time to the geological time $t$, by deforming said grid so as to construct a succession of grids each node of which remains attached to a single material point during deformation, referred to as Lagrangian grids, by means of a three-dimensional structural restoration wherein the deformation of said basin is calculated by solving equations of the continuous media mechanics using a finite-element method,
> - a simulation of geological and geochemical processes that govern a petroleum reservoir accumulation is carried out, said simulation being performed in said Lagrangian grids from the geological time $t$ to the current one, and
> - mapping of said sedimentary basin is performed from said simulation, so as to identify zones of the basin wherein hydrocarbons may have accumulated.

**2.** A method as claimed in claim 1, wherein structural restoration comprises a stage of correction of said Lagrangian grids by adding layers of cells representing eroded sediments, or by removing an upper layer of cells representing a sediment deposited during a prior stage.

**3.** A method as claimed in any one of the previous claims, wherein structural restoration comprises a stage of correction of said Lagrangian grids where a vertical displacement of the nodes, calculated according to a depth-dependent law so as to take account of the decompaction of the sediment during a prior stage, is incremented.

**4.** A method as claimed in any one of the previous claims, wherein said geological and geochemical processes are selected from among the following processes: accumulation of the sedimentary layers, compaction of the sedimentary layers under the effect of the weight of overlying sediments, warming of the sedimentary layers during burial thereof, fluid pressure changes resulting from said burial, chemical transformation of organic matter to hydrocarbons, displacement of said hydrocarbons in said basin under the effect of floatability, capillarity and advection through underground flows, and trapping of the hydrocarbons in reservoirs.

**5.** A method as claimed in any one of the previous claims, wherein a subgrid is constructed at the level of slip interfaces, such as faults or detachments, so that one face of a cell on one side of the interface is in contact with a single face of a cell located on the other side.

**6.** A method as claimed in any one of the previous claims, wherein said Lagrangian grids are supplemented with two layers of cells added along slip interfaces, by duplicating on each side of the interface the cells of the Lagrangian grid while ensuring coincidence of the cells on each side of the interface, and by assigning to the cells of the two layers a quasi-zero thickness, so as to take account of an anisotropic behaviour of the slip interfaces.

**7.** A petroleum exploration method, wherein the location of hydrocarbon reservoirs and the economic interest thereof within a sedimentary basin are predicted by means of the following stages:

> - acquiring data relative to said sedimentary basin,
> - achieving mapping of said basin by means of the method as claimed in any one of the previous claims,
- identifying zones of the basin wherein hydrocarbons may have accumulated, by analysis of said mapping,
- carrying out exploratory drilling operations in said zones.

**Patentansprüche**

1. Verfahren zum Kartographieren eines Sedimentbeckens, das Sedimentschichten und Frakturen aufweist und dessen Architektur und Natur der Schichten aus einer Deformation des Untergrundes im Verlaufe der geologischen Zeiträume zwischen einer geologischen Zeit $t$ und der Gegenwart resultieren, bei welchem ein Gitter konstruiert wird, das für die gegenwärtige Architektur des Beckens repräsentativ ist, **dadurch gekennzeichnet, dass**:

   - frühere Architekturen des Beckens ausgehend von der Gegenwart bis zu der geologischen Zeit $t$ wiederhergestellt werden, indem das Gitter deformiert wird, um eine Folge von Gittern, bei denen jeder Knotenpunkt im Verlaufe der Deformation mit ein und demselben materiellen Punkt gekoppelt bleibt und die Lagrange-Gitter genannt werden, mittels einer strukturellen Wiederherstellung in drei Dimensionen zu konstruieren, bei welcher die Deformation des Beckens durch Lösung von Gleichungen der Mechanik der kontinuierlichen Medien mit Hilfe einer Finite-Elemente-Methode berechnet wird;
   - eine Simulation geologischer und geochemischer Prozesse durchgeführt wird, welche eine Entstehung eines Erdölvorkommens steuern, wobei die Simulation in den Lagrange-Gittern ab der geologischen Zeit $t$ bis zur Gegenwart durchgeführt wird; und
   - eine Kartographierung des Sedimentbeckens ausgehend von der Simulation durchgeführt wird, derart, dass Zonen des Beckens identifiziert werden, in welchen sich Kohlenwasserstoffe ansammeln konnten.

2. Verfahren nach Anspruch 1, wobei die strukturelle Wiederherstellung einen Schritt der Korrektur der Lagrange-Gitter umfasst, indem Schichten von Gitterelementen hinzugefügt werden, welche erodierte Sedimente repräsentieren, oder indem eine obere Schicht von Gitterelementen weggelassen wird, welche ein Sediment repräsentiert, das im Verlaufe eines früheren Zeitabschnitts abgelagert wurde.

3. Verfahren nach einem der vorhergehenden Ansprüche, wobei die strukturelle Wiederherstellung einen Schritt von Korrekturen der Lagrange-Gitter umfasst, in welchem eine vertikale Verschiebung der Knotenpunkte inkrementiert wird, welche gemäß einer von der Tiefe abhängigen Funktion berechnet wird, derart, dass die Dekompaktierung des Sediments im Verlaufe eines früheren Zeitabschnitts berücksichtigt wird.

4. Verfahren nach einem der vorhergehenden Ansprüche, wobei die geologischen und geochemischen Prozesse unter den folgenden Prozessen ausgewählt werden: Entstehung der Sedimentschichten, Verdichtung der Sedimentschichten unter der Einwirkung des Gewichts der darüberliegenden Schichten, Erwärmung der Sedimentschichten im Verlaufe ihrer Überlagerung, Änderungen von Fluiddrücken, die aus der Überlagerung resultieren, chemische Umwandlung von organischen Stoffen in Kohlenwasserstoffe, Verlagerung der Kohlenwasserstoffe in dem Becken unter der Wirkung des Auftriebs, der Kapillarität und der Advektion durch unterirdische Abflüsse, und Auffangen der Kohlenwasserstoffe in Lagerstätten.

5. Verfahren nach einem der vorhergehenden Ansprüche, wobei ein Untergitter im Bereich von Gleit-Grenzflächen wie etwa Verwerfungen oder Abscherungen konstruiert wird, derart, dass sich eine Fläche eines Gitterelements auf einer Seite der Grenzfläche in Kontakt mit nur einer Fläche eines auf der anderen Seite befindlichen Gitterelements befindet.

6. Verfahren nach einem der vorhergehenden Ansprüche, wobei die Lagrange-Gitter durch zwei Schichten von Gitterelementen vervollständigt werden, die entlang von Gleit-Grenzflächen hinzugefügt werden, indem auf jeder Seite der Grenzfläche die Gitterelemente des Lagrange-Gitters dupliziert werden, wobei gleichzeitig eine Koinzidenz der Gitterelemente jeder Seite der Grenzfläche sichergestellt wird, und indem den Gitterelementen der zwei Schichten eine Dicke zugewiesen wird, die quasi gleich null ist, derart, dass ein anisotropes Verhalten der Gleit-Grenzflächen berücksichtigt wird.

7. Verfahren zur Erkundung von Erdölvorkommen, wobei die Lage von Kohlenwasserstoffvorkommen und ihre wirtschaftliche Bedeutung im Inneren eines Sedimentbeckens mittels der folgenden Schritte vorhergesagt werden:

   - Es werden Daten erfasst, welche das Sedimentbecken betreffen;
   - es wird eine Kartographierung des Beckens mittels des Verfahrens nach einem der vorhergehenden Ansprüche durchgeführt;
   - durch Analyse der Kartographierung werden Zonen des Beckens identifiziert, in welchen sich Kohlenwasserstoffe ansammeln konnten;
   - in diesen Zonen werden Erkundungsbohrun-

gen durchgeführt.

**Fig. 1**

**Fig. 2**

**Fig. 3**

MNC

**Fig. 4A**

**Fig. 4B**

**Fig. 5A**                    **Fig. 5B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Steckler, M.S. ; A.B. Watts.** Subsidence of the Atlantic-type continental margin off New York. *Earth Planet. Sci. Lett.,* 1978, vol. 41, 1-13
- **I.Moretti ; F.Lepage ; M.Guiton.** KINE3D: a new 3D restauration method based on a mixed approach linking geometry and geomechanics. *Oil & Gas Science and Technology - Rev.IFP,* 2006, vol. 61 (2), 277-289
- **R. Scheichl ; R. Masson ; J. Wendebourg.** Decoupling and Block Preconditioning for Sedimentary Basin Simulations. *Computational Geosciences,* 2003, vol. 7 (4), 295-318
- **R. Eymard ; T. Gallouet ; R. Herbin.** Handbook for Numerical Analysis. 2000
- **X.Jiao ; T.Heath.** Overlaying Surface Meshes, Part I: Algorithms. *International Journal of Computational Geometry & Applications,* 2004, vol. 14 (6), 379-402